# EUROPÄISCHE PATENTSCHRIFT

(11) **EP 3 208 400 B1**
(45) Veröffentlichungstag und Bekanntmachung des Hinweises auf die Patenterteilung: **29.01.2025**
(21) Anmeldenummer: 16000427.1
(22) Anmeldetag: 22.02.2016
(51) Int. Cl.: B27N 5/00, B32B 3/28, B32B 7/12, B32B 13/10, B32B 15/10, B32B 21/04, B32B 21/08, B32B 21/14, E04C 2/16, E04C 2/32, E04C 2/34, B32B 21/02

(54) **LEICHTBAUPLATTE ENTHALTEND WELLENFÖRMIGE ELEMENTE**
LIGHTWEIGHT BOARD CONTAINING UNDULATED ELEMENTS
PANNEAU DE CONSTRUCTION LÉGER COMPRENANT DES ÉLÉMENTS ONDULÉS

(43) Veröffentlichungstag der Anmeldung: 23.08.2017
(73) Patentinhaber: Wood Innovations Ltd., 9492 Eschen (LI)
(72) Erfinder: Möller, Achim, 01157 Dresden (DE); Eckstein, Thomas, 01159 Dresden (DE)
(74) Vertreter: Ricker, Mathias

(56) Entgegenhaltungen:
- EP-A1- 2 660 408
- EP-A1- 2 873 522
- WO-A1-2008/067662
- WO-A1-2015/067362
- BE-A- 547 811
- JP-A- H10 278 014

## Beschreibung

### GEBIET DER ERFINDUNG

Die vorliegende Erfindung betrifft einen Mehrschichtverbund aufweisend ein wellenförmiges Leichtbauplattenelement, welches aus miteinander verbundenen Holzfasern besteht. Die Erfindung betrifft ferner die Verwendung des Mehrschichtverbunds.

### HINTERGRUND DER ERFINDUNG

Es ist bekannt, Verbundmaterialien zur Herstellung von Mehrschichtverbunden zu verwenden, die im Vergleich zu ihrem Gewicht eine relativ hohe mechanische Stabilität aufweisen.

CH 254025 betrifft einen Mehrschichtverbund, der zwei Deckplatten aufweist und eine Kernschicht dazwischen, wobei die Kernschicht mindestens eine Schicht gefalteten Furniers aufweist.

DE 42 01 201 betrifft Halbzeug oder Fertigprodukt aus Holz, welche aus plättchenförmigen Flächenelementen hergestellt sind. Die plättchenförmigen Elemente können zick-zack-förmig ausgebildet sein.

DE 10 2008 022 806 betrifft eine Leichtbauplatte mit einer wellenförmigen Holzfurnierschicht. Die Wellen können zick-zack-förmig ausgebildet sein.

BE 547 811 betrifft eine Kernschicht bestehend aus zwei zick-zack-förmig ausgebildeten Holzelementen, welche zwischen zwei Deckschichten angeordnet sind.

DE 10 2008 022805 A1 betrifft eine Wellfurnierplatte und daraus aufgebaute Leichtbauplatten. Die Wellenstruktur der verwendeten Holzelemente kann zick-zack-förmig, Sinus-förmig und Trapez-förmig sein.

EP 1 923 209 betrifft eine Leichtbau-Verbundplatte mit Außenlagen und einer Mittellage, wobei die Mittellage in einem Winkel zur Ebene der Leichtbau-Verbundplatte angeordnet ist.

Diesen Mehrschichtverbunden aus dem Stand der Technik ist gemeinsam, dass die Kernschicht eine aufgelockerte Struktur aufweist. Bei Krafteinwirkung senkrecht zur Oberfläche des Mehrschichtverbunds weist dieser eine dämpfende Wirkung auf, da sich die Kernschicht zumindest teilweise komprimieren lässt.

Ein Nachteil aufgelockerter Kernschichten kann darin liegen, dass sie eine geringe Homogenität aufweisen können, die durch relativ große Hohlräume in der Kernschicht hervorgerufen wird.

Leichtbauplatten mit verbesserter Stabilität sind beschrieben in EP 2 660 408 A1 und WO 2015/067362. Diese Patentanmeldungen betreffen eine Kernschicht, welche für einen Mehrschichtverbund geeignet ist, der mindestens eine Deckschicht und eine Kernschicht aufweist, wobei die Deckschicht so angeordnet ist, dass sie die Kernschicht zumindest teilweise bedeckt und mit dieser in fester Verbindung steht, wobei die Kernschicht Elemente aus Holz aufweist, welche plättchenförmige Bereiche aufweisen, die zick-zack-förmig angeordnet sind, wobei ein plättchenförmiger zick-Bereich eines Elements mit einem angrenzenden plättchenförmigen zack-Bereich des Elements eine gemeinsame Kante zwischen sich ausbilden, derart, dass das zick-zack-förmig ausgebildete Holzelement gebildet wird, wobei zick-zack-förmig ausgebildete Elemente in der Kernschicht so angeordnet sind, dass zwei derartige Kanten zweier verschiedener Elemente sich in einem Winkel überkreuzen, der verschieden von Null ist und wobei die zwei Elemente an der Überkreuzungsstelle fest miteinander verbunden sind.

EP 2 488 337 B1 (WO 2011/079920) betrifft ein Verfahren zur Herstellung eines partikelbasierten Elements, nämlich einer Spanplatte oder Faserplatte, wobei das Element in einer Längsrichtung wellenförmig oder in einer Längsrichtung und einer Breitenrichtung jeweils wellenförmig sein kann.

EP 1 758 733 B1 (WO 2005/113230 A1) betrifft ein Sandwichelement umfassend mindestens zwei Deckschichten und mindestens eine zwischen den Deckschichten angeordnete Mittellage in Form eines periodisch wiederkehrenden zweifach gekrümmten Schalentragwerks mit gegensinnigen Hauptkrümmungen, ein Verfahren zu dessen Herstellung und Verwendung.

EP 2 873 522 offenbart ein Verfahren zum Herstellen einer Verbundplatte und eine Verbundplatte.

EP 1 272 715 (WO 00/58581 A1) offenbart ein Verbundbauteil, das eine nicht eben geformte Verbundbahn aufweist.

EP 3 126 110 (WO 2015/149942) offenbart ein Verfahren zur Herstellung eines wellenförmigen Holzelements.

JPH10-278014 offenbart eine wellenförmige Platte aus Pflanzenstücken.

### AUFGABE DER ERFINDUNG

Aufgrund des ständig steigenden Bedarfs nach Leichtbauplatten mit hoher Stabilität unter Belastung besteht die Aufgabe der vorliegenden Erfindung darin, entsprechende Produkte zur Verfügung zu stellen, insbesondere Produkte, welche bei möglichst niedrigem Gewicht eine möglichst hohe Festigkeit und Belastbarkeit besitzen. Zudem sollen sich diese Leichtbauplatten kostengünstig herstellen lassen, insbesondere durch die Integration der Herstelltechnologie in bestehende Produktionsanlagen.

### ZUSAMMENFASSUNG DER ERFINDUNG

Diese Aufgabe wird erfindungsgemäß gelöst mit einem Mehrschichtverbund wie in Anspruch 1 definiert. Bevorzugte Ausführungsformen sind in den von Anspruch 1 direkt abhängigen Ansprüchen definiert. Die Verwendung ist in dem von Anspruch 1 indirekt abhängigen Anspruch definiert.

Die nachfolgend verwendeten Begriffe in Anführungs- und Schlusszeichen sind im Sinne der Erfindung definiert.

### KURZE BESCHREIBUNG DER FIGUREN

In den Figuren zeigt
- **Fig. 1**: eine schematische Seitenansicht eines wellenförmigen Elements aufweisend zumindest eine Welle, hier eine sinusoide Welle;
- **Fig. 2**: eine Draufsicht auf das wellenförmige Element der **Fig. 1****,** wobei die durchgezogenen Linien Wellenberge (positive Halbwelle) und die gestrichelten Linien Wellentäler (negative Halbwelle) symbolisieren;
- **Fig. 3**: zeigt eine Draufsicht auf ein Leichtbauelement der **Fig. 2****,** wenn die Wellenberge und Wellentäler ihrerseits wellenförmig verformt sind;
- **Fig. 4**: eine Seitenansicht des Elements der **Fig. 3****,** wenn die zweite Welle durch eine dritte Welle überlagert ist.
- **Fig. 5**: zeigt eine schematische perspektivische Darstellung der Anordnung der **Fig. 3****.**

### DETAILLIERTE BESCHREIBUNG DER ERFINDUNG

### Leichtbauplattenelemente

Ein Element, welches zur Herstellung eines erfindungsgemäßen Mehrschichtverbunds verwendbar ist, liegt so vor, dass es sich entlang einer - insbesondere ebenen - Fläche erstreckt, wobei das Element einen entlang der Fläche verlaufenden ersten wellenförmigen Verlauf einer ersten Welle mit sich entlang einer ersten Ausbreitungsrichtung veränderlichen Elongation aufweist, bei dem Wellenberge der Oberseite und Wellentäler der Unterseite des Elements entlang einer zweiten Richtung parallel zueinander angeordnet sind, wobei diese zweite Richtung in einem Winkel α mit 0°< α ≤ 90° , vorzugsweise ca. 90°, zur ersten Richtung und entlang dieser Fläche liegt, wobei das Element aus miteinander verbundenen Holzfasern besteht.

Somit sind sowohl die Oberseite wie auch die Unterseite des Elements Bestandteil einer Welle. Auf der Oberseite befinden sich die Wellenberge und auf der Unterseite zugehörige Wellentäler. Die Wellenberge können auch als Wellenkämme bezeichnet werden.

Der Begriff *"Element"* bedeutet ein Bauteil oder eine Komponente des erfindungsgemäßen Mehrschichtverbunds in Form einer Leichtbauplatte. Im Folgenden wird dieses Element auch als Leichtbauplattenelement bezeichnet.

Der Begriff *"Welle"* im Element wird im physikalischen Sinn durch eine sich räumlich ausdehnende Schwingung veranschaulicht. In ihrer breitesten Bedeutung beschreiben die Begriffe *"Welle"* oder *"Wellenstruktur"'* oder *"wellenförmig"* oder *"wellenartig"* mindestens einen Wellenberg und ein Wellental in der Welle. Somit weist die Welle im mathematischen Sinn mindestens eine positive und negative Halbwelle auf.

Die verwendeten Begriffe schließen auch sich wiederholende wellenförmige Struktureinheiten im Element ein.

Die Welle kann im mathematischen Sinn durch die Elongation der Schwingung, durch die Amplitude der Schwingung wie auch durch die Schwingungsebene der positiven oder negativen Halbwelle, d.h. des Wellenbergs und des Wellentals, charakterisiert werden. Eine Charakterisierung über die Wellenlänge, also über die Länge eines Wellenbergs und des sich daran anschließenden Wellentals ist gleichfalls möglich. Der Übergang zwischen einem Wellenberg und einem Wellental kann - in Abhängigkeit von der Form der Welle - durch einen Wendepunkt im wellenförmigen Verlauf wie auch durch einen geraden Abschnitt charakterisiert werden.

Die Welle kann bezüglich ihrer Amplitude oder Wellenlänge oder Amplitude und Wellenlänge variiert werden. Dadurch kann die Dicke der Kernschicht in der Leichtbauplatte ebenso beeinflusst werden wie ihre Steifigkeit. Andererseits ist es auch möglich, die Steifigkeit der Leichtbauplatte über Plattenparameter wie Dicke der Welle, d.h. die Dicke des wellenförmigen oder wellenartigen Elements in der Leichtbauplatte, der Span- und Fasergeometrie im Element, der Verdichtung der Elemente in der Platte wie auch des Verleimungsgrads der Elemente untereinander und mit den Deckschichten der Platte beeinflusst werden.

Bei der Welle kann es sich sowohl um eine sich transversal (geradlinig) wie auch um eine sich radial ausbreitende oder verlaufende Welle handeln.

Die Form der Welle kann dabei jegliche erdenkliche Struktur annehmen.

In einer Ausführungsform ist die Welle in Form einer Sinus-Funktion oder einer Funktion ausgebildet, welche ähnlich einer Sinus-Funktion ist, d.h. sie liegt in Form einer Sinus-Funktion dar und/oder ist sinusoid. Im Folgenden werden die Begriffe *"sinusförmig"* oder *"sinusoid"* synonym verwendet.

In einer weiteren Ausführungsform ist die Welle in Form einer Dreieckschwingung ausgebildet. Der Begriff *"Dreieckschwingung"* umfasst auch den Begriff *"dreieckähnliche Schwingung".*

In einer weiteren Ausführungsform ist die Welle in Form einer Sägezahnschwingung ausgebildet. Eine derartige Schwingung kann auch als Kippschwingung bezeichnet werden.

In einer weiteren Ausführungsform ist die Welle in Form einer Rechteckschwingung ausgebildet.

Die genannten Wellenformen sind in der Physik bekannt und können auch mathematisch beschrieben werden.

In einer weiteren Ausführungsform weist die Welle unterschiedliche Wellenformen auf, d.h. mindestens zwei, oder drei oder vier Wellenformen ausgewählt aus: Dreieckschwingung, sinusoide Schwingung, Sägezahnschwingung oder Rechteckschwingung.

In einer Ausführungsform können diese Wellen in beliebiger Reihenfolge im wellenförmigen Element entlang einer gemeinsamen Ausbreitungsrichtung angeordnet sein.

In einer weiteren Ausführungsform können sich auch zwei oder mehr der vorstehend genannten Schwingungsarten in einer gemeinsamen Ausbreitungsrichtung überlagern und eine entsprechend neue Wellenform ausbilden.

Durch geeignete Überlagerung kann beispielweise eine trapezförmige Schwingung entstehen.

Die Wellenform im wellenförmigen Element kann auch damit beschrieben werden, dass das wellenförmige Element in Form eines Leichtbauplattenelements plättchenförmige Bereiche aufweist, wobei ein plättchenförmiger Bereich im wellenförmigen Element mit einem angrenzenden plättchenförmigen Bereich im wellenförmigen Element eine gemeinsame Kante zwischen sich ausbildet, derart, dass das Element wellenförmig ausgebildet ist. Somit bilden die plättchenförmigen Bereiche einschließlich der Kante eine Welle aus.

Der Begriff *"plättchenförmige Bereiche"* schließt Bereiche ein, die in Form von Flächen ausgebildet sind. Die Flächen können eben, d.h. plan, oder auch uneben sein, d.h. nicht plan, vorzugsweise dann gekrümmt, vorzugsweise konvex oder konkav, oder gewellt.

Der Begriff *"Kante"* schließt Begriffe wie *"Übergangsbereich zwischen zwei benachbarten plättchenförmigen Bereichen"* ein. Dieser Übergangsbereich kann eine Kante sein, welche scharf ausgeprägt ist. Der Begriff schließt auch eine Kante ein, welche wie eine gekrümmte Fläche oder wie eine plane (ebene) Fläche ausgestaltet ist. Somit schließt der Begriff *"Kante"* eine scharfe Kante in Form einer Linie wie auch eine wellige oder gewellte Kante in der Form einer kurvenförmigen Ebene oder einen gekrümmten Bereich zwischen zwei plättchenförmigen Bereichen ein. Somit bilden die plättchenförmigen Bereiche im wellenförmigen Element eine wellenförmige Struktur aus, d.h. einem Wellental folgt ein Wellenberg und umgekehrt.

Vorzugsweise sind Kanten, welche von benachbarten plättchenförmigen Bereichen im wellenförmigen Element gebildet werden, parallel zueinander ausgerichtet.

Der Begriff *"gekrümmt ausgebildete Fläche"* bedeutet eine konvex ausgebildete Fläche oder eine konkav ausgebildete Fläche oder eine Fläche, die sowohl einen konvexen wie auch konkaven Anteil aufweist. Insbesondere bedeutet der Begriff *"gekrümmt"* auch *"kontinuierlich gekrümmt".*

Somit wird auch ein wellenförmiges Element offenbart, welches plättchenförmige Bereiche aufweist, wobei ein plättchenförmiger Bereich im wellenförmigen Element mit einem angrenzenden plättchenförmigen Bereich im wellenförmigen Element eine gemeinsame Kante zwischen sich ausbildet, derart, dass das Element wellenförmig ausgebildet ist, wobei
(a) die plättchenförmigen Bereiche plane Flächen sind und die zwischen den planen Flächen ausgebildete Kante eine Linie ist. Eine derartige Welle kann als zick-zack-Welle beschrieben werden; oder
(b) die plättchenförmigen Bereiche plane Flächen sind und die zwischen den planen Flächen ausgebildete Kante eine gekrümmte Fläche ist; oder
(c) die plättchenförmigen Bereiche plane Flächen sind und die zwischen den planen Flächen ausgebildete Kante ein plane Fläche ist; oder
(d) die plättchenförmigen Bereiche gekrümmt ausgebildete Flächen sind und die zwischen den gekrümmten Flächen ausgebildete Kante eine gekrümmt ausgebildete Fläche ist, vorzugsweise eine konvex ausgebildete Fläche; oder
(e) die plättchenförmigen Bereiche gekrümmt ausgebildete Flächen sind und die zwischen den gekrümmten Flächen ausgebildete Kante geradenförmig ist; oder
(f) die plättchenförmigen Bereiche gekrümmt ausgebildete Flächen sind und die zwischen den gekrümmten Flächen ausgebildete Kante eine plan ausgebildete Fläche ist.

In einer Ausführungsform weist die Welle mindestens eine oder zwei oder drei oder vier oder fünf oder sechs der Wellenformen (a) bis (f) auf.

In einer Ausführungsform wird das Element gebildet aus
(c') einem Element (c), derart, dass die Welle im Längsschnitt gesehen sich wiederholende Einheiten in Form eines Trapezes aufweist; oder
(d') Elementen (d), derart, dass die Welle im Längsschnitt gesehen sich wiederholende Einheiten in Form einer Sinus-Funktion oder einer sinusoiden Funktion aufweist.

Die gute Druck- und Schubfestigkeit und -steifigkeit der Elemente (a) bis (f) bzw. einer Kernschicht enthaltend diese Elemente oder ein Mehrschichtverbund enthaltend die Kernschicht lässt sich noch deutlich verbessern, wenn die Kernschicht insbesondere Elemente (d') enthält oder aus diesen Elementen besteht.

Derartige Wellenformen sind bekannt und sind in der EP 2 660 408 A1 und der WO 2015/067362 beschrieben. Zur weiteren Erläuterung wird deshalb ausdrücklich auf diese Dokumente hingewiesen.

In einer erfindungsgemäßen Ausführungsform werden die mindestens eine positive und negative Halbwelle, d.h. der Wellenberg und das Wellental, von einer zweiten Welle überlagert.

Dies bedeutet auch, dass die erste Welle und damit das Leichtbauplattenelement unter Bildung der zweiten Welle deformiert oder verformt sind.

Die Form der zweiten Welle kann unabhängig von der Form der ersten Welle unter den Formen gewählt werden, welche in Bezug auf die erste Welle weiter oben beschrieben sind.

In einer Ausführungsform verläuft, wenn sich die erste Welle in einem kartesischen Koordinatensystem mit den Raumachsen x, y und z in x-Richtung ausbreitet und die Schwingungsebene in oder parallel zur x,z-Ebene liegt, die Schwingungsebene der ersten Welle senkrecht zur Schwingungsebene der zweiten Welle, wobei die zweite Welle sich in y-Richtung ausbreitet und die Schwingungsebene in oder parallel zur y,z-Ebene liegt.

In einer bevorzugten Ausführungsform verläuft, wenn sich die erste Welle in einem kartesischen Koordinatensystem mit den Raumachsen x, y und z in x-Richtung ausbreitet und die Schwingungsebene in oder parallel zur x,z-Ebene liegt, die Schwingungsebene der ersten Welle senkrecht zur Schwingungsebene der zweiten Welle, wobei die zweite Welle sich in y-Richtung ausbreitet und die Schwingungsebene in oder parallel zur x,y-Ebene liegt.

In einer weiteren bevorzugten Ausführungsform wird die zweite Welle und damit das Leichtbauplattenelement unter Bildung der dritten Welle weiter deformiert und verformt.

Somit werden die zweite Welle und damit auch die erste Welle von einer dritten Welle überlagert.

Selbstverständlich ist es auch denkbar, die dritte Welle und damit auch die erste und die zweite Welle mit einer vierten Welle zu überlagern, oder die vierte Welle und damit auch die erste, die zweite und die dritte Welle ihrerseits mit einer fünften Welle zu überlagern, usw.

Die Form der dritten Welle kann unabhängig von der Form der ersten Welle und der zweiten Welle unter den Formen gewählt werden, welche in Bezug auf die erste und die zweite Welle weiter oben beschrieben sind.

Vorzugsweise verläuft die Schwingungsebene der dritten Welle parallel zur Schwingungsebene der ersten Welle.

In einer weiteren Ausführungsform verlaufen die Schwingungsebene der ersten Welle und die Schwingungsebene der zweiten Welle senkrecht zueinander, wobei die Schwingungsebene der dritten Welle parallel zur Schwingungsebene der ersten Welle verläuft.

In einer bevorzugten Ausführungsform verläuft, wenn sich die erste Welle in einem kartesischen Koordinatensystem mit den Raumachsen x, y und z in x-Richtung ausbreitet und die Schwingungsebene in oder parallel zur x,z-Ebene liegt, die Schwingungsebene der ersten Welle senkrecht zur Schwingungsebene der zweiten Welle, wobei die zweite Welle sich in y-Richtung ausbreitet und die Schwingungsebene in oder parallel zur x,y-Ebene liegt, und die Schwingungsebene der dritten Welle in oder parallel zur y,z-Ebene liegt, wobei sich die dritte Welle in y-Richtung ausbreitet.

Mit einer derartigen Ausführungsform kann die Stabilität der Elemente und damit die Stabilität der Leichtbauplatte weiter verbessert werden. Ein solches Element weist eine vergleichsweise erhöhte Steifigkeit auf, da im Element eine Art von *"Aussteifungsrippen"* erzeugt wird. Zusätzlich vermindert die Dreifachwellung weiter die Wahrscheinlichkeit des Ineinandergleitens von Wellenbergen bzw. Wellentälern benachbarter übereinanderliegender Elemente bei der Herstellung der Leichtbauplatte, wenn diese Elemente eine gleiche oder ähnliche Grundausrichtung aufweisen.

Das wellenförmige Element besteht aus miteinander verbundenen Holzfasern .

Der Begriff "Faser" bedeutet ein im Verhältnis zu seiner Länge dünnes und flexibles Gebilde. Vorzugsweise kann das Verhältnis von Länge zu Durchmesser mindestens zwischen 3:1 und 10:1 liegen.

Das Leichtbauplattenelement weist einen Kleber auf. Mit Hilfe des Klebers werden die Fasern zur Erhöhung der Festigkeit miteinander verbunden.

Die Erfindung offenbart des Weiteren ein Leichtbauplattenelement, das sich entlang einer - insbesondere ebenen - Fläche erstreckt, wobei das Leichtbauplattenelement einen entlang der Fläche verlaufenden ersten wellenförmigen Verlauf einer ersten Welle mit sich entlang einer ersten Ausbreitungsrichtung veränderlichen Elongation aufweist, bei dem Wellenberge der Oberseite und Unterseite des Leichtbauplattenelements entlang einer zweiten Richtung parallel zueinander angeordnet sind, wobei diese zweite Richtung in einem Winkel α mit 0°< α ≤ 90°, vorzugsweise ca. 90°, zur ersten Richtung und entlang dieser Fläche liegt, und wobei diesem ersten wellenförmigen Verlauf ein zweiter wellenförmiger Verlauf einer zweiten Welle des Leichtbauplattenelements überlagert ist, so dass die Wellenberge des ersten wellenförmigen Verlaufs eine weitere Wellung entlang mindestens dieser zweiten Richtung aufweisen,
und wobei das Leichtbauplattenelement aus miteinander verbundenen Holzfasern besteht.

### Herstellung wellenförmiger Elemente

Für die Erfindung brauchbare Leichtbauplattenelemente wie vorstehend definiert können allgemein nach einem Verfahren hergestellt werden, aufweisend mindestens die Stufen (A) und (B) oder (A) und (C):
(A) Anordnen von Fasern, derart, dass sich die Fasern berühren;
(B) Verpressen der sich berührenden Fasern der Stufe (A) in einem Presswerkzeug, wobei das Presswerkzeug so ausgestaltet ist, dass das nach dem Verpressen erhaltene wellenförmige Element die erste Welle oder die zweite Welle oder die dritte Welle aufweist; oder
(C) Verpressen der sich berührenden Fasern der Stufe (A) in einem Presswerkzeug und Führen der verpressten Fasern und/oder Späne durch ein Profilierwerkzeug, wobei das Profilierwerkzeug so ausgestaltet ist, dass das nach dem Durchführen erhaltene Leichtbauplattenelement die erste Welle oder die zweite Welle oder die dritte Welle aufweist.

Somit kann das in den Stufen (B) oder (C) erhaltene Element die erste Welle, die von der zweiten Welle überlagerte erste Welle oder die von der zweiten Welle überlagerte erste Welle aufweisen, wobei die zweite Welle ihrerseits von der dritten Welle überlagert ist.

In einer Ausführungsform ist es möglich, in Stufe (A) die Fasern im Presswerkzeug anzuordnen. Damit weist die Stufe (A) die Stufe (A1) und die Stufe (B) die Stufe (B1) auf:
(A1) Anordnen von Fasern, derart, dass sich die Fasern berühren, wobei die Fasern in einem Presswerkzeug angeordnet werden;
(B1) Verpressen der sich berührenden Fasern der Stufe (A1) im Presswerkzeug, wobei das Presswerkzeug so ausgestaltet ist, dass das nach dem Verpressen erhaltene wellenförmige Element die erste Welle oder die zweite Welle oder die dritte Welle aufweist.

In einer weiteren Ausführungsform ist es möglich, in Stufe (A) die Fasern anzuordnen, derart, dass sich die Fasern berühren, und diese flach oder eben zu verpressen und dann das verpresste Material der Stufe (B) zuzuführen.

Demzufolge weist dann die Stufe (A) die Stufe (A2) und die Stufe (B) die Stufe (B2) auf:
(A2) Anordnen von Fasern, derart, dass sich die Fasern berühren, wobei die Fasern so verpresst werden, dass eine flache Anordnung entsteht;
(B2) Verpressen der verpressten Fasern der Stufe (A2) in einem Presswerkzeug, wobei das Presswerkzeug so ausgestaltet ist, dass das nach dem Verpressen erhaltene wellenförmige Element die erste Welle oder die zweite Welle oder die dritte Welle aufweist.

Das Leichtbauplattenelement kann nach einem Verfahren hergestellt werden, aufweisend mindestens die Stufen (A) und (B) oder (A) und (C):
(A) Anordnen von Holzfasern, derart, dass sich die Fasern;
(B) Verpressen der sich berührenden Fasern der Stufe (A) in einem Presswerkzeug, wobei das Presswerkzeug so ausgestaltet ist, dass das nach dem Verpressen erhaltene Leichtbauplattenelement die erste Welle oder die zweite Welle oder die dritte Welle aufweist; oder
(C) Verpressen der sich berührenden Fasern der Stufe (A) in einem Presswerkzeug und Führen der verpressten Fasern durch ein Profilierwerkzeug, wobei das Profilierwerkzeug so ausgestaltet ist, dass das nach dem Durchführen erhaltene Leichtbauplattenelement die erste Welle oder die zweite oder die dritte Welle aufweist.

Die in Stufe (A) verwendeten Holzfasern bei der Herstellung des Leichtbauelements fallen beispielsweise in der holzverarbeitenden Industrie an.

In einer Ausführungsform weist das Presswerkzeug der Stufe (B) Erhebungen und Vertiefungen auf, die beim Verpressen die Fasern zumindest teilweise kontaktieren. Mit Hilfe geeigneter Erhebungen und Vertiefungen können die erste Welle und die zweite und gegebenenfalls die dritte Welle des Leichtbauplattenelements erfindungsgemäß ausgestaltet werden, vorzugsweise geprägt werden.

Geeignete Pressvorrichtungen und Verfahren zur Ausgestaltung von Elementen aufweisend eine Welle sind beispielsweise aus der EP 2 488 337 B1 bekannt. Geeignete Pressvorrichtungen zur Herstellung des Leichtbauplattenelements können entsprechend ausgestaltet werden.

In einer Ausführungsform weist das Presswerkzeug der Stufe (B) keine Erhebungen und Vertiefungen auf. Dann wird in die Fasern oder Späne keine Wellenstruktur eingeprägt. Sie können dann in Stufe (C) durch ein geeignetes Profilierwerkzeug geleitet werden, welches dann die Wellenstruktur ausformt.

In einer Ausführungsform weist das Profilierwerkzeug der Stufe (C) ein oder mehrere Profilierwalzen auf. Mit Hilfe geeigneter Profilierwalzen können die Wellen des Leichtbauplattenelements erfindungsgemäß ausgestaltet werden.

Die beim Verpressen verwendeten Drucke können den Erfordernissen angepasst werden. In einer Ausführungsform liegt der Druck im Bereich von 5 bis 15 MPa. Die Verwendung höherer oder niedrigerer Drucke ist in anderen Ausführungsformen möglich.

In Stufe (A) werden die Fasern zumindest teilweise mit einem Klebstoff kontaktiert. Damit kann die Stabilität der Elemente weiter erhöht werden.

Das nach dem Verfahren hergestellte Element ist bezüglich seiner Abmessungen nicht begrenzt. Es können runde oder rundliche Leichtbauplattenelemente wie auch polygonale Leichtbauplattenelemente hergestellt werden.

Vorzugsweise werden rechteckige Leichtbauplattenelemente hergestellt, die über eine Länge und Breite definiert sind.

In einer Ausführungsform werden in Stufe (B) oder (C) verpresste Fasern eingesetzt, die so dimensioniert sind, dass das Verhältnis von Länge zur Breite des hergestellten Leichtbauplattenelements im Bereich von 2 : 1 bis 50 : 1 liegt, weiter bevorzugt im Bereich von 2 : 1 bis 40 : 1.

In einer Ausführungsform liegt im Leichtbauplattenelement das Produkt aus Länge x Breite im Bereich von 10 mm x 5 mm bis 3000 mm x 1000 mm.

Somit können in einer Ausführungsform relative kleine Leichtbauplattenelemente wie auch bahnförmige Leichtbauplattenelemente hergestellt werden.

In einer weiteren Ausführungsform können relativ große Leichtbauplattenelemente, die vorzugsweise bahnförmig ausgestaltet sind, einem Zerkleinerungsschritt unterzogen werden, falls aus diesen bahnförmigen Elementen relativ kleine Leichtbauplattenelemente hergestellt werden sollen.

Relativ kleine Leichtbauplattenelemente weisen vorzugsweise ein Produkt aus Länge x Breite im Bereich von 10 x 5 mm bis 200 x 100 mm auf, weiter bevorzugt 10 x 5 mm bis 100 x 50 mm, weiter bevorzugt 10 x 5 mm bis 50 x25 mm. Der Begriff *"Länge"* bedeutet den kürzesten Abstand zwischen Anfang und Ende des wellenförmigen Elements in Längsrichtung des Elements. Der Begriff *"Breite"* bedeutet den Abstand zwischen den Seitenrändern quer zur Längsrichtung des Elements.

Vorzugsweise werden in Stufe (A) Fasern in das Verfahren eingesetzt, die so dimensioniert ist, dass das nach dem Verfahren erhaltene Element gemäß der Stufen (B) oder (C) eine Dicke im Bereich von 0,1 bis 5 mm aufweist, vorzugsweise 0,2 mm bis 3,5 mm, weiter bevorzugt 0,2 mm bis 2 mm.

Der Begriff *"Dicke"* bedeutet den kleinsten Abstand zwischen zwei einander gegenüber liegenden Oberflächen eines wellenförmigen Elements. Diese Oberflächen sind durch die Dicke der plättchenförmigen Bereiche oder der Kante voneinander beabstandet.

Die Dicke der Wellenbahn muss nicht notwendigerweise an allen Stellen der Welle gleich sein. Es ist möglich, dass die Wellenberge und Wellentäler bzw. gerade Abschnitte zwischen Wellenbergen und Wellentälern unterschiedliche Dicken aufweisen. Auch ist es durch die verwendete Presstechnik möglich, dass in der Welle Bereiche unterschiedlicher Dicke auftreten.

Vorzugsweise wird das Verfahren so durchgeführt, dass die Vertiefungen und Erhebungen des Presswerkzeugs der Stufe (B) bzw. das Profil des profilierten Werkzeugs der Stufe (C) so gewählt werden, dass die Wellenhöhe des Leichtbauplattenelements im Bereich von 1 bis 20 mm liegt, vorzugsweise 2 bis 12 mm, mehr bevorzugt 2 bis 8 mm.

Der Begriffe *"Wellenhöhe"* bedeutet dabei den kleinsten Abstand zwischen zwei imaginären, zueinander parallelen Ebenen, zwischen die das wellenförmige Element angeordnet werden kann, derart, dass die Wellen zwischen diesen Ebenen liegen.

In einer besonders bevorzugten Ausführungsform liegt die Dicke des wellenförmigen Elements im Bereich von 0,2 bis 5 mm und die Wellenhöhe liegt im Bereich von 2 bis 15 mm.

In einer weiteren besonders bevorzugten Ausführungsform liegt die Dicke des wellenförmigen Elements im Bereich von 0,2 bis 2 mm und die Wellenhöhe liegt im Bereich von 2 bis 8 mm.

Die nach dem Verfahren hergestellten Leichtbauplattenelemente weisen vorzugsweise eine Rohdichte im Bereich von 150 bis 430 kg/m³ auf.

Die hergestellten wellenförmigen Elemente besitzen eine ausgezeichnete Tragfähigkeit, so dass sie als oder für eine aufgelockerte Kernschicht bzw. in Mehrschichtverbunden mit aufgelockerter Kernschicht verwendet werden können, die ihrerseits bei relativ geringer Dichte eine hohe Tragfähigkeit erlauben.

### Kernschicht, aufweisend wellenförmige Elemente

Kernschichten wie hierin offenbart weisen Leichtbauplattenelemente auf wie vorstehend definiert, oder weisen Leichtbauplattenelemente auf hergestellt nach einem Verfahren wie vorstehend definiert.

Der Begriff *"Kernschicht"* bedeutet eine Schicht, welche neben den Leichtbauplattenelementen zusätzlich Hohlräume aufweist, also eine aufgelockerte Struktur aufweist.

Der Begriff *"Schicht"* wird synonym zum Begriff *"Lage"* verwendet.

In einer Ausführungsform sind die Leichtbauplattenelemente in der Kernschicht in mindestens einer ersten und einer zweiten Schicht angeordnet und zumindest teilweise miteinander verklebt.

In einer weiteren Ausführungsform enthalten die mindestens eine erste und die zweite Schicht jeweils eine Vielzahl von Leichtbauplattenelementen.

In einer Ausführungsform sind die Leichtbauplattenelemente in der mindestens einen ersten Schicht und der zweiten Schicht zumindest teilweise jeweils regellos angeordnet. Diese Ausführungsform ist insbesondere dann von Vorteil, wenn die Leichtbauplattenelemente relativ kleine Abmessungen aufweisen.

In einer weiteren bevorzugten Ausführungsform enthalten die mindestens eine erste und die zweite Schicht der Kernschicht jeweils nur ein Leichtbauplattenelement. Vorzugsweise werden in dieser Ausführungsform dann bahnförmige Leichtbauplattenelemente eingesetzt.

In dieser Ausführungsform kann der Winkel zwischen der ersten Richtung der ersten Welle in der ersten Schicht und der ersten Richtung der ersten Welle in der zweiten Schicht 90° betragen. Der Begriff *"Winkel von 90°"* lässt auch Abweichungen von ± 10° zu.

### Verfahren zur Herstellung einer Kernschicht wie vorstehend definiert

Vorliegend wird ein Verfahren zur Herstellung einer Kernschicht wie vorstehend definiert offenbart, aufweisend mindestens die Stufen (D) bis (F):
(D) Anordnen mindestens eines Leichtbauplattenelements wie vorstehend definiert, oder hergestellt nach einem Verfahren wie vorstehend definiert, wobei das mindestens eine wellenförmige Element eine erste Schicht ausbildet;
(E) Anordnen mindestens eines zweiten Leichtbauplattenelements wie vorstehend definiert, oder hergestellt nach einem Verfahren wie vorstehend definiert, auf der ersten Schicht, wobei das auf der ersten Schicht angeordnete mindestens eine Leichtbauplattenelement eine zweite Schicht ausbildet, derart, dass die erste und die zweite Schicht zumindest teilweise zwei übereinander liegende Schichten ausbilden;
(F) zumindest teilweises Verkleben der Leichtbauplattenelemente untereinander.

Das mindestens eine Leichtbauplattenelement wird in Stufe (D) auf einem geeigneten Träger angeordnet. Der Träger ist vorzugsweise ein Material mit einer ebenen Fläche, auf der das oder die Elemente angeordnet werden können.

Das Verfahren kann weiter mindestens die Stufe (E1) aufweisen:
(E1) Anordnen mindestens eines weiteren Leichtbauplattenelements wie vorstehend definiert, oder hergestellt nach einem Verfahren wie vorstehend definiert auf der zweiten Schicht der Stufe (E), wobei das auf der zweiten Schicht angeordnete Leichtbauplattenelement zumindest teilweise eine dritte Schicht ausbildet, derart, dass die zweite und die dritte Schicht zumindest teilweise zwei übereinander liegende Schichten ausbilden.

Das feste Verbinden der Stufe (F) kann durch Anlegen von Druck erleichtert werden. Dieser liegt vorzugsweise im Bereich von 0,02 MPa bis 4,0 MPa, mehr bevorzugt im Bereich von 0,01 bis 3,0 MPa.

### Mehrschichtverbund

Die Erfindung offenbart einen Mehrschichtverbund, mindestens aufweisend eine erste Deckschicht oder eine erste und eine zweite Deckschicht und eine Kernschicht, wobei die Kernschicht eine Kernschicht ist wie vorstehend definiert, oder eine Kernschicht ist wie vorstehend beschriebenhergestellt, wobei die Kernschicht mit der ersten Deckschicht oder der ersten Deckschicht und der zweiten Deckschicht verklebt ist, wobei sich die Kernschicht zwischen der ersten und der zweiten Deckschicht befindet, wenn der Mehrschichtverbund die zweite Deckschicht aufweist.

Damit sind die erste Deckschicht oder die erste und die zweite Deckschicht mit der Kernschicht flächig verklebt.

In einer Ausführungsform weist/weisen die erste oder die zweite oder die erste und die zweite Deckschicht jeweils zwei durch eine Dicke voneinander beabstandete Seiten auf, und die Seite, welche mit dem mindestens einen Element verklebt ist, ist profiliert.

Das Profil kann in einer Wellenstruktur vorliegen. Das Profil kann über geeignete Werkzeuge in die Deckschicht eingebracht werden.

Dies hat den Vorteil, dass zur Gewichtsersparnis weitere Hohlräume in den Mehrschichtverbund eingebracht werden können, ohne die Stabilität des Verbunds zu stark nachteilig zu beeinflussen.

Vorzugsweise weist/weisen die erste Deckschicht oder die zweite Deckschicht oder die erste Deckschicht und die zweite Deckschicht unabhängig voneinander ein Material auf ausgewählt aus: Furnier, Holzplatte wie Holzwerkstoffplatte oder Massivholzplatte, Spanplatte, Faserplatte, Sperrholzplatte, Kunststoffplatte, Gipskarton, Blech, Faserzementplatte, und aus zwei oder mehr davon.

Vorzugsweise ist mindestens eine Deckschicht eben, d.h. ebenflächig.

Die Deckschichten sind hinsichtlich ihrer Form nicht limitiert.

Vorzugsweise weist mindestens eine Deckschicht eine quadratische oder eine rechteckige Form auf.

Die Abmessungen der Deckschicht sind nicht limitiert.

Vorzugsweise liegen bei rechteckigen Formen die Breite und die Länge jeweils im Bereich von 0,50 m bis 5 m, weiter bevorzugt im Bereich von 1 bis 3 m.

In einer erfindungsgemäßen Ausführungsform weist der Mehrschichtverbund eine Kernschicht auf, die lediglich ein wellenförmiges Leichtbauelement aufweist oder aus diesem besteht, wie in Anspruch 1 definiert.

Demzufolge betrifft die Erfindung auch einen Mehrschichtverbund, mindestens aufweisend eine erste Deckschicht oder eine erste und eine zweite Deckschicht, eine Kernschicht und Hohlräume zwischen der Kernschicht und der Deckschicht oder den Deckschichten, wobei die Kernschicht lediglich ein Leichtbauplattenelement aufweist oder aus diesem besteht, wie vorstehend definiert, oder ein Leichtbauplattenelement hergestellt nach einem Verfahren wie vorstehend definiert, wobei die Kernschicht mit der ersten Deckschicht oder der ersten Deckschicht und der zweiten Deckschicht verklebt ist, wobei sich die Kernschicht zwischen der ersten und der zweiten Deckschicht befindet, wenn der Mehrschichtverbund die zweite Deckschicht aufweist.

### Herstellung eines Mehrschichtverbunds

Weist die Kernschicht des Mehrschichtverbunds lediglich ein Leichtbauelement auf oder besteht aus diesem einen Leichtbauelement, kann zur Herstellung des Leichtbauverbundes ein Verfahren eingesetzt werden, das lediglich das Anordnen und Verkleben des einen Leichtbauelements auf der ersten Deckschicht vorsieht, wobei optional die zweite Deckschicht mit der Kernschicht verklebt werden kann.

### Verformte Kernschicht

In einer Ausführungsform kann die Kernschicht wie vorstehend definiert oder hergestellt nach dem Verfahren wie vorstehend definiert einem Schritt der Druckverformung unterworfen werden, wobei dreidimensionale Objekte hergestellt werden können. Dazu kann die Kernschicht in einem geeigneten Presswerkzeug verformt werden. Diese Verformung kann während der Herstellung der Kernschicht wie auch im Anschluss daran erfolgen.

In einer Ausführungsform werden lediglich die Kanten der Kernschicht verformt, vorzugsweise durch Komprimieren. Damit ist es möglich, die Hohlräume an den Kanten der Kernschicht abzudichten. Dieses Druckverformen kann durchgeführt werden während des Zusammenfügens der Kernschicht, jedoch auch im Anschluss an das Zusammenfügen der Kernschicht in einer nachgeschalteten Stufe, beispielsweise durch thermisches Erweichen des Klebers an den Kanten. Diese Ausführungsform hat den Vorteil, dass eine Riegelstruktur in die Kernschicht bzw. den Kanten der Kernschicht eingebracht werden kann.

Beim Komprimieren ergibt sich die Möglichkeit, den Randteil der Kernschicht mit einem balligen Profil, also einem gerundeten Profil, zu versehen. Dies ist z.B. bei hochwertigen Möbelbauteilen häufig wünschenswert.

In einer weiteren Ausführungsform können nicht nur der Kantenbereich sondern zusätzlich oder getrennt vom Kantenbereich auch weitere Bereiche der Kernschicht druckverformt werden.

Ein Verfahren zur Herstellung dreidimensionaler Holzgegenstände durch Druckverformung wird in der DD 271870 und der DE 101 24 912 beschrieben. Die dain genannten Verfahrensbedingungen können auch auf die erfindungsgemäße Kernschicht angewendet werden.

Somit wird eine verformte Kernschicht offenbart, aufweisend Leichtbauplattenelemente wie vorstehend definiert, oder aufweisend Leichtbauplattenelemente hergestellt nach einem Verfahren wie vorstehend definiert, wobei die Leichtbauplattenelemente zumindest teilweise verformt sind, herstellbar durch ein Verfahren mindestens aufweisend die Stufe (U):
(U) Druckverformen der Kernschicht wie vorstehendd definiert oder der Kernschicht hergestellt nach einem Verfahren wie vorstehend definiert.

### Verformter Mehrschichtverbund

In einer Ausführungsform kann auch der erfindungsgemäße Mehrschichtverbund wie vorstehend definiert oder hergestellt nach dem Verfahren wie vorstehend definiert einem Schritt der Druckverformung unterworfen werden, wobei dreidimensionale Objekte hergestellt werden können. Diese Druckverformung kann in einer Weise durchgeführt werden vorstehend definiert.

Demzufolge offenbart die Erfindung somit einen verformten Mehrschichtverbund, mindestens aufweisend eine erste Deckschicht oder eine erste und eine zweite Deckschicht, wobei die Kernschicht eine Kernschicht ist wie vorstehend
definiert, oder eine Kernschicht ist hergestellt nach einem Verfahren wie vorstehend definiert, wobei die Kernschicht mit der ersten Deckschicht oder mit der ersten und der zweiten Deckschicht verklebt ist, wobei sich die Kernschicht zwischen der ersten und der zweiten Deckschicht befindet, wenn der Mehrschichtverbund die zweite Deckschicht aufweist, wobei die Kernschicht und die erste Deckschicht oder die Kernschicht, die erste und die zweite Deckschicht zumindest teilweise verformt sind, mindestens aufweisend die Stufe (V):
(V) Druckverformen des Mehrschichtverbunds wie vorstehend definiert, oder des Mehrschichtverbunds hergestellt nach einem Verfahren wie vorstehend beschrieben.

### Verwendungen

Die Erfindung betrifft die Verwendung eines Mehrschichtverbunds wie vorstehend definiert im Rohbau, Hochbau, Fertigbau, Ausbau, Innenausbau, zum Schall- und Wärmeschutz, für Inneneinrichtungen, Möbel, Türen und Türfüllungen, Dekorationen, im Fahrzeugbau, Caravanbau, Schiffsinnenausbau, Flugzeuginnenausbau und in der Verpackungstechnik.

### BEISPIELE

Elemente, die dem Verständnis der Erfindung behilflich sind, sind in den Zeichnungen schematisch dargestellt. Sie werden im Folgenden mit Bezug zu den Figuren der Zeichnungen näher erläutert.

### Figuren

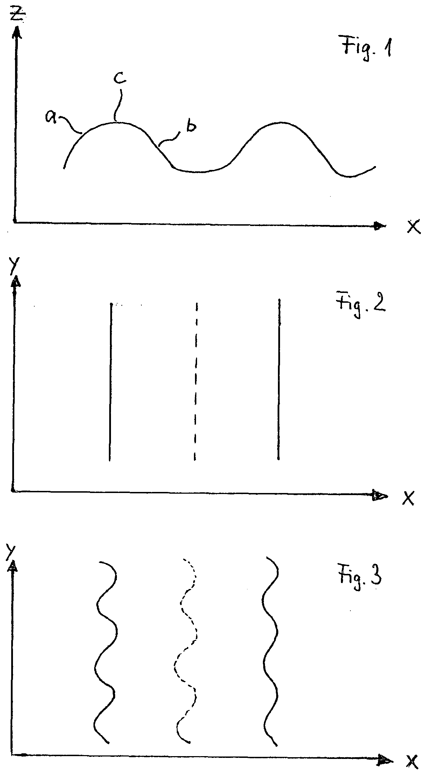

**Fig. 1** zeigt eine schematische Seitenansicht eines Leichtbauelements aufweisend zumindest eine Welle, hier eine sinusoide Welle. Die Welle breitet sich in einem kartesischen Koordinatensystem in x-Richtung aus, wobei die Schwingungsebene der Welle in oder parallel zur x,z-Ebene liegt. Die Welle kann auch so beschrieben werden, dass plättchenförmige Bereiche a und b vorliegen, welche eine gemeinsame Kante c zwischen sich einschließen. Die plättchenförmigen Bereiche sind gekrümmt ausgebildet, wobei auch die Kante eine gekrümmt ausgebildete Fläche ist.
**Fig. 2** zeigt eine Draufsicht auf die x,y-Ebene des Leichtbauelements der **Fig. 1****,** wobei die durchgezogenen Linien Wellenberge (positive Halbwellen) und die gestrichelten Linien Wellentäler (negative Halbwellen) symbolisieren.
**Fig. 3** zeigt eine Draufsicht auf die x,y-Ebene des Leichtbauelements der **Fig. 2****,** wobei die Wellenberge und Wellentäler der ersten Welle verformt sind, d.h. von einer zweiten Welle überlagert werden, wobei die zweite Welle sinusoid ist. Hierbei liegt, wenn sich die erste Welle in einem kartesischen Koordinatensystem mit den Raumachsen x, y und z in x-Richtung ausbreitet und die Schwingungsebene der ersten Welle parallel zur x,z-Ebene liegt, die Schwingungsebene der ersten Welle senkrecht zur Schwingungsebene der zweiten Welle, wobei sich die zweite Welle in y-Richtung ausbreitet und die Schwingungsebene in oder parallel zur x,y-Ebene liegt.

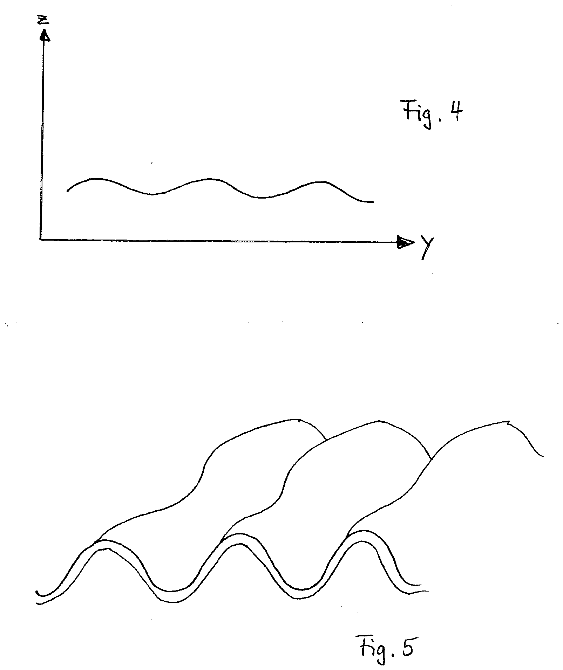

**Fig. 4** zeigt eine Seitenansicht auf ein Leichtbauplattenelement ausgehend vom Leichtbauplattenelement der der **Fig. 3****,** wobei die zweite Welle verformt ist, d.h. von einer dritten Welle überlagert wird, wobei die dritte Welle sinusoid ist. Hierbei liegt, wenn sich die erste Welle in einem kartesischen Koordinatensystem mit den Raumachsen x, y und z in x-Richtung ausbreitet und die Schwingungsebene parallel zur x,z-Ebene liegt, die Schwingungsebene der ersten Welle senkrecht zur Schwingungsebene der zweiten Welle, wobei sich die zweite Welle in y-Richtung ausbreitet und die Schwingungsebene in oder parallel zur x,y-Ebene liegt, wobei die Schwingungsebene der dritten Welle parallel zur y,z-Ebene liegt, wobei sich die dritte Welle in y-Richtung ausbreitet.
**Fig. 4** zeigt auch eine Seitenansicht auf ein Leichtbauplattenelement ausgehend vom Leichtbauplattenelement der **Fig. 2****,** wobei die erste Welle verformt ist, d.h. von einer zweiten Welle überlagert wird. Hierbei liegt, wenn sich die erste Welle in einem kartesischen Koordinatensystem mit den Raumachsen x, y und z in x-Richtung ausbreitet und die Schwingungsebene in oder parallel zur x,z-Ebene liegt, die Schwingungsebene der ersten Welle senkrecht zur Schwingungsebene der zweiten Welle, wobei die zweite Welle sich in y-Richtung ausbreitet und die Schwingungsebene der zweiten Welle in oder parallel zur y,z-Ebene liegt.
**Fig. 5** zeigt eine schematische perspektivische Darstellung der Anordnung der **Fig. 3****.** Die sinusoide erste Welle ist dabei von einer sinusoiden zweiten Welle überlagert bzw. die Wellenberge und Wellentäler der sinusoiden ersten Welle sind ihrerseits sinusoid gewellt.

### Anwendungsbeispiel (nicht erfindungsgemäß)

In einem Anwendungsbeispiel wurden einseitig ebenflächige und auf der Gegenseite mit Wellenprofil versehene, 5 mm dicke, großformatige Deckschichten aus einem Gemisch von Spanplatten-Deckschichtspänen und Spanplattenleim mittels einer entsprechend profilierten, beheizten Pressplatte bei einer Presstemperatur von 180 °C und einer Presszeit von 4 Minuten gepresst. Die Wellenhöhe betrug 3,5 mm bei einer Wellenlänge von 6 mm.

Parallel dazu wurden großformatige Wellenelemente mit den gleichen Wellenmaßen und einer Dicke von 0,6 mm und dem gleichen Ausgangsmaterial mittels eines entsprechend profilierten Pressplattenpaares hergestellt. Nach dem Pressen erfolgte die Beleimung der Wellenberge und Wellentäler in einer Walzenbeleimmaschine. Es folgte das Zerteilen in 40 mm breite Streifen mittels Rollenschneidern und das anschließende Brechen in 30 bis 45 mm lange Partikel. Diese Partikel (Leichtbauplattenelemente) wurden von einer Streumaschine in Schichten auf die zuvor gefertigte, mit dem Wellenprofil nach oben zeigende Deckschicht bis zu einer Höhe von 28 mm gestreut. Schließlich wurde die obere Deckschicht aufgelegt und das Presspaket bei einer Temperatur von 180 °C und einer Verdichtung bis auf 25 mm gepresst.

Es wurde eine Leichtbauplatte mit einer Dichte von 250 kg/m³ und einer geschlossenen, mit Furnier oder Folie beschichtbaren Oberfläche erhalten.

## Patentansprüche

1. Mehrschichtverbund, mindestens aufweisend eine erste Deckschicht oder eine erste und eine zweite Deckschicht, eine Kernschicht und Hohlräume zwischen der Kernschicht und der Deckschicht oder den Deckschichten,
wobei die Kernschicht aus einem Leichtbauplattenelement besteht,
wobei das Leichtbauplattenelement sich entlang einer - insbesondere ebenen - Fläche erstreckt,
wobei das Leichtbauplattenelement einen entlang der Fläche verlaufenden ersten wellenförmigen Verlauf einer ersten Welle mit sich entlang einer ersten Ausbreitungsrichtung veränderlichen Elongation aufweist, bei dem Wellenberge der Oberseite und Unterseite des Leichtbauplattenelements entlang einer zweiten Ausbreitungsrichtung parallel zueinander angeordnet sind, wobei diese zweite Ausbreitungsrichtung in einem Winkel α mit 0°< α ≤ 90°, vorzugsweise ca. 90°, zur ersten Ausbreitungsrichtung und entlang der Fläche liegt,
wobei die Kernschicht mit der ersten Deckschicht oder der ersten Deckschicht und der zweiten Deckschicht flächig verklebt ist, wobei sich die Kernschicht zwischen der ersten Deckschicht und der zweiten Deckschicht befindet, wenn der Mehrschichtverbund die zweite Deckschicht aufweist; und
wobei die Deckschicht oder eine der Deckschichten ebenflächig ist;
wobei das Leichtbauplattenelement eine Dicke im Bereich von 0,1 bis 5 mm aufweist, wobei der Begriff "Dicke" den kleinsten Abstand zwischen zwei einander gegenüber liegenden Oberflächen des Leichtbauplattenelements bedeutet,
**dadurch gekennzeichnet, dass** das Leichtbauplattenelement aus Holzfasern und Kleber besteht und, dass die Holzfasern mit Hilfe des Klebers zur Erhöhung der Festigkeit des Leichtbauplattenelements miteinander verbunden werden.

2. Mehrschichtverbund nach Anspruch 1,
wobei dem ersten wellenförmigen Verlauf ein zweiter wellenförmiger Verlauf einer zweiten Welle des wellenförmigen Leichtbauplattenelements überlagert ist, so dass die Wellenberge und Wellentäler des ersten wellenförmigen Verlaufs eine weitere Wellung entlang mindestens der zweiten Ausbreitungsrichtung aufweisen.

3. Mehrschichtverbund nach Anspruch 1 oder 2,
wobei dem zweiten wellenförmigen Verlauf der zweiten Welle ein dritter wellenförmiger Verlauf einer dritten Welle überlagert ist.

4. Mehrschichtverbund nach einem der Ansprüche 2 oder 3, wobei, wenn sich die erste Welle in einem kartesischen Koordinatensystem mit den Raumachsen x, y und z in x-Richtung ausbreitet und die Schwingungsebene der ersten Welle parallel zur x,z-Ebene liegt, die Schwingungsebene der ersten Welle senkrecht zur Schwingungsebene der zweiten Welle liegt, wobei sich die zweite Welle in y-Richtung ausbreitet und deren Schwingungsebene parallel zur y,z-Ebene liegt.

5. Mehrschichtverbund nach einem der Ansprüche 2 oder 3, wobei, wenn sich die erste Welle in einem kartesischen Koordinatensystem mit den Raumachsen x, y und z in x-Richtung ausbreitet und die Schwingungsebene der ersten Welle parallel zur x,z-Ebene liegt, die Schwingungsebene der ersten Welle senkrecht zur Schwingungsebene der zweiten Welle liegt, wobei sich die zweite Welle in y-Richtung ausbreitet und deren Schwingungsebene parallel zur x,y-Ebene liegt.

6. Mehrschichtverbund nach Ansprüchen 3 und 5, wobei die Schwingungsebene der dritten Welle parallel zur y,z-Ebene liegt, wobei sich die dritte Welle in y-Richtung ausbreitet.

7. Mehrschichtverbund nach einem der vorstehenden Ansprüche, wobei die Wellenhöhe im Bereich von 1 bis 20 mm liegt, wobei die Wellenhöhe definiert ist als der kleinste Abstand zwischen zwei imaginären, zueinander parallelen Ebenen, zwischen die das wellenförmige Element angeordnet werden kann, derart, dass die Wellen zwischen diesen Ebenen liegen.

8. Mehrschichtverbund nach einem der vorstehenden Ansprüche, wobei der Kleber ausgewählt ist aus der Gruppe bestehend aus: Glutin, Kasein, Harnstoff-Formaldehyd, Phenol-Formaldehyd, Resorcin-Formaldehyd, Melamin-Formaldehyd, Polyvinylacetat und Polyurethan.

9. Mehrschichtverbund nach einem der vorstehenden Ansprüche, wobei das Leichtbauplattenelement bahnförmig ist.

10. Mehrschichtverbund nach einem der vorstehenden Ansprüche, wobei jede Welle in Form einer Sinus-Funktion oder einer Funktion ausgebildet ist, welche ähnlich einer Sinus-Funktion ist, d.h. sie liegt in Form einer Sinus-Funktion vor und/oder ist sinusoid.

11. Mehrschichtverbund nach Anspruch 10, wobei die erste Deckschicht oder die zweite Deckschicht oder die erste Deckschicht und die zweite Deckschicht unabhängig voneinander ein Material aufweist/aufweisen ausgewählt aus: Furnier, Holzplatte wie Holzwerkstoffplatte oder Massivholzplatte, Spanplatte, Faserplatte, Sperrholzplatte, Kunststoffplatte, Gipskarton, Blech, Faserzementplatte, und aus zwei oder mehr davon.

12. Verwendung eines Mehrschichtverbunds nach einem der Ansprüche 1 bis 11 im Rohbau, Hochbau, Fertigbau, Ausbau, Innenausbau, zum Schall- und Wärmeschutz, für Inneneinrichtungen, Möbel, Türen und Türfüllungen, Dekorationen, im Fahrzeugbau, Caravanbau, Schiffsinnenausbau, Flugzeuginnenausbau und in der Verpackungstechnik.

## Claims

1. Multi-layer composite, comprising at least a first cover layer or a first and a second cover layer, a core layer and cavities between the core layer and the cover layer or the cover layers, wherein the core layer consists of a lightweight panel element, where the lightweight panel element extends along a - in particular flat - surface, wherein the lightweight panel element has a first wave-shaped course of a first wave running along the surface with an elongation that changes along a first direction of propagation, in which wave crests of the top and bottom of the lightweight panel element are arranged in parallel to one another along a second direction of propagation, wherein this second direction of propagation being at an angle α with 0° < α < 90°, preferably approximately 90°, to the first propagation direction and along the surface, wherein the core layer is bonded to the first cover layer or the first cover layer and the second cover layer over the surface, the core layer being located between the first cover layer and the second cover layer if the multilayer composite has the second cover layer, and wherein the cover layer or one of the cover layers is flat, wherein the lightweight panel element has a thickness in the range of from 0.1 to 5 mm, wherein the term "thickness" means the smallest distance between two opposite surfaces of the lightweight panel element,
**characterized in that**
the lightweight panel element consists of wood fibers and adhesive and that the wood fibers are connected to one another with the aid of the adhesive to increase the strength of the lightweight panel element.

2. Multilayer composite according to claim 1, wherein a second wave-shaped course of a second wave of the wave-shaped lightweight panel element is superimposed on the first wave-shaped course such that the wave crests and wave troughs of the first wave-shaped course have a further corrugation along at least the second propagation direction.

3. Multilayer composite according to claim 1 or 2, wherein a third wave-shaped course of a third wave is superimposed on the second wave-shaped course of the second wave.

4. Multilayer composite according to one of claims 2 or 3, wherein, when the first wave propagates in a Cartesian coordinate system with the spatial axes x, y and z in x-direction and the oscillation plane of the first wave is parallel to the x,z-plane, the oscillation plane of the first wave is perpendicular to the oscillation plane of the second wave, wherein the second wave propagates in the y-direction and its oscillation plane is parallel to the y,z-plane.

5. Multilayer composite according to one of claims 2 or 3, wherein, when the first wave propagates in a Cartesian coordinate system with the spatial axes x, y and z in x-direction and the oscillation plane of the first wave is parallel to the x,z-plane, the oscillation plane of the first wave is perpendicular to the oscillation plane of the second wave, wherein the second wave propagates in the y-direction and its oscillation plane is parallel to the x,y-plane.

6. Multilayer composite according to claims 3 and 5, wherein the oscillation plane of the third wave is parallel to the y,z-plane, wherein the third wave propagates in the y-direction.

7. Multilayer composite according to one of the preceding claims, wherein the wave height is in the range of from 1 to 20 mm, wherein the wave height is defined as the smallest distance between two imaginary planes being in parallel to one another, between which the wave-shaped element can be arranged such that the waves lie between these planes.

8. Multilayer composite according to one of the preceding claims, wherein the adhesive is selected from the group consisting of: glutin, casein, urea formaldehyde, phenol formaldehyde, resorcinol formaldehyde, melamine formaldehyde, polyvinyl acetate and polyurethane.

9. Multilayer composite according to one of the preceding claims, wherein the lightweight panel element is in the form of a web.

10. Multilayer composite according to one of the preceding claims, wherein each wave is in the form of a sine function or a function which is similar to a sine function, i.e. it is in the form of a sine function and/or is sinusoidal.

11. Multilayer composite according to claim 10, wherein the first cover layer or the second cover layer or the first cover layer and the second cover layer independently from one another comprises/comprise a material selected from: veneer, wood panel such as wood-based panel or solid wood panel, chipboard, fiberboard, plywood panel, plastic panel, plasterboard, sheet metal, fiber cement panel, and two or more of these.

12. Use of a multilayer composite according to one of claims 1 to 11 in shell construction, building construction, prefabricated construction, finishing, interior construction, for sound and heat insulation, for interior fittings, furniture, doors and door panels, decorations, in vehicle construction, caravan construction, ship interior construction, aircraft interior construction and in packaging technology.

## Revendications

1. Composite multicouches, présentant au moins une première couche de couverture ou une première et une deuxième couches de couverture, une couche centrale et des cavités entre la couche centrale et la couche de couverture ou les couches de couverture,
dans lequel la couche centrale se compose d'un élément de panneaux légers de construction,
dans lequel l'élément de panneaux légers de construction s'étend le long d'une surface - en particulier plane -,
dans lequel l'élément de panneaux légers de construction présente une première courbe ondulée d'une première onde courant le long de la surface ayant un allongement variable le long d'une première orientation d'extension, dans laquelle des pics d'onde du côté supérieur et du côté inférieur de l'élément de panneaux légers de construction sont disposés le long d'une deuxième orientation d'extension parallèlement les uns aux autres, cette deuxième orientation d'extension résidant dans un angle α avec 0° < α ≤ 90°, de préférence d'environ 90°, pour la première orientation d'extension et le long de la surface,
dans lequel la couche centrale est collée à pleine surface avec la première couche de couverture ou la première couche de couverture et la deuxième couche de couverture, dans lequel la couche centrale se trouve entre la première couche de couverture et la deuxième couche de couverture, lorsque le composite multicouches présente la deuxième couche de couverture ; et
dans lequel la couche de couverture ou l'une des couches de couverture est de surface plane ; dans lequel l'élément de panneaux légers de construction présente une épaisseur dans la plage de 0,1 à 5 mm, le terme « épaisseur » désignant la plus petite distance entre deux surfaces opposées de l'élément de panneaux légers de construction,
**caractérisé en ce que** l'élément de panneaux légers de construction se compose de fibres de bois et de colle, et **en ce que** les fibres de bois sont reliées les unes aux autres à l'aide de la colle pour augmenter la résistance de l'élément de panneaux légers de construction.

2. Composite multicouches selon la revendication 1,
dans lequel une deuxième courbe ondulée d'une deuxième onde de l'élément ondulé de panneaux légers de construction est superposée à la première courbe ondulée, de sorte que les pics d'ondes et les creux d'ondes de la première courbe ondulée présentent une autre ondulation le long d'au moins la deuxième orientation d'extension.

3. Composite multicouches selon la revendication 1 ou 2,
dans lequel une troisième courbe ondulée d'une troisième onde est superposée à la deuxième courbe ondulée.

4. Composite multicouches selon l'une des revendications 2 ou 3, dans lequel, si la première onde s'étend dans un système de coordonnées cartésien avec les axes spatiaux x, y et z dans la direction x et le plan d'oscillation de la première onde se situe parallèlement au plan x, z, le plan d'oscillation de la première onde réside perpendiculairement au plan d'oscillation de la deuxième onde, la deuxième onde s'étendant dans la direction y et son plan d'oscillation reposant parallèlement au plan y, z.

5. Composite multicouches selon l'une des revendications 2 ou 3, dans lequel, si la première onde s'étend dans un système de coordonnées cartésien avec les axes spatiaux x, y et z dans la direction x et le plan d'oscillation de la première onde se situe parallèlement au plan x, z, le plan d'oscillation de la première onde réside perpendiculairement au plan d'oscillation de la deuxième onde, la deuxième onde s'étendant dans la direction y et son plan d'oscillation reposant parallèlement au plan x, y.

6. Composite multicouches selon les revendications 3 et 5, dans lequel le plan d'oscillation de la troisième onde se situe parallèlement au plan y, z, la troisième onde s'étendant dans la direction y.

7. Composite multicouches selon l'une des revendications précédentes, dans lequel la hauteur d'onde se situe dans la plage de 1 à 20 mm, la hauteur d'onde étant définie en tant que distance la plus petite entre deux plans imaginaires parallèles l'un à l'autre, entre lesquels l'élément ondulé peut être disposé, de telle sorte que les ondes se situent entre ces plans.

8. Composite multicouches selon l'une des revendications précédentes, dans lequel la colle est choisie dans le groupe se composant de glutine, caséine, urée-formaldéhyde, phénol-formaldéhyde, résorcine-formaldéhyde, mélamine-formaldéhyde, polyvinylacétate et polyuréthane.

9. Composite multicouches selon l'une des revendications précédentes, dans lequel l'élément de panneaux légers de construction est en forme de bande.

10. Composite multicouches selon l'une des revendications précédentes, dans lequel chaque onde est conçue sous la forme d'une fonction sinusoïdale ou d'une fonction qui est semblable à une fonction sinusoïdale, ce qui veut dire qu'elle se présente sous la forme d'une fonction sinusoïdale et/ou est sinusoïdale.

11. Composite multicouches selon la revendication 10, dans lequel la première couche de couverture ou la deuxième couche de couverture ou la première couche de couverture et la deuxième couche de couverture présentent indépendamment les unes des autres un matériau choisi parmi : le placage, le panneau de bois comme le panneau de matériaux de bois ou le panneau en bois massif, le panneau de particules, le panneau de fibres, le panneau de contre-plaqué, le panneau en plastique, la plaque de plâtre, la tôle, le panneau de fibrociment, et parmi deux ou plusieurs de ceux-ci.

12. Utilisation d'un composite multicouches selon l'une des revendications 1 à 11 dans le gros œuvre, la construction de bâtiments, la construction préfabriquée, l'agrandissement, l'aménagement intérieur, pour l'isolation contre le bruit et la chaleur, pour des installations intérieures, des meubles, des portes et remplissages de portes, des décorations, dans la construction de véhicule, la construction de caravanes, l'aménagement d'intérieur de navires, l'aménagement intérieur d'aéronef, et dans la technique des emballages.
